# EUROPÄISCHE PATENTSCHRIFT

(11) **EP 2 875 859 B1**
(45) Veröffentlichungstag und Bekanntmachung des Hinweises auf die Patenterteilung: **01.05.2019**
(21) Anmeldenummer: 14194030.4
(22) Anmeldetag: 20.11.2014
(51) Int. Cl.: B01J 21/06, B01J 32/00, B01J 35/00, B01D 53/86, F01N 3/28

(54) **Katalysatorträgerkörper**
Catalyst support body
Support de catalyseur

(30) Priorität: 21.11.2013 DE 202013105277 U
(43) Veröffentlichungstag der Anmeldung: 27.05.2015
(73) Patentinhaber: RGenau Industries KG, 08393 Meerane (DE)
(72) Erfinder: Genau, Rico, 08393 Meerane (DE)
(74) Vertreter: Steiniger, Carmen

(56) Entgegenhaltungen:
- DE-T2- 69 729 513
- JP-A- 2007 105 649

## Beschreibung

Die vorliegende Erfindung betrifft einen Katalysatorträgerkörper mit wenigstens einem photokatalytisch aktivierbaren Katalysatormaterial.

Bei der Photokatalyse werden chemische Substanzen unter dem Einfluss von Licht umgewandelt. Dabei wird die jeweilige Substanz durch Absorption von Photonen in einen angeregten Zustand versetzt, wobei die aufgenommene Energie für eine Umsetzung des Substrates genutzt wird. Der hierbei eingesetzte Katalysator absorbiert die Energie des Lichtes, überträgt sie auf eine reaktive Verbindung und löst so eine Reaktion aus, ohne dabei selbst verbraucht zu werden.

Mit photokatalytisch aktivierbaren Katalysatoren lassen sich u. a. Schadstoffe, wie beispielsweise Kohlenwasserstoff, Stickoxide (NOₓ), Schwefeloxide (SOₓ) oder Kohlenmonoxid (CO) abbauen. Die Photokatalyse wandelt die Schadstoffe in ungefährliche Stoffe, wie z. B. Nitrate, Carbonate, Sulfate oder Wasser um. Diese Reaktionsprodukte dienen beispielsweise als Düngemittel für Pflanzen. Die Photokatalyse leistet somit einen wichtigen Beitrag zur Luftreinigung, Wasseraufbereitung, Beseitigung von mikrobiellem Bewuchs an Oberflächen und Unterstützung von Reinigungsprozessen.

Photokatalytisch aktivierbare Katalysatormaterialien werden vorzugsweise in Form von Aufschlämmungen oder Dispersionen, beispielsweise von Metalloxiden in Pulverform, auf einen Katalysatorträgerkörper aufgebracht. Der Katalysatorträgerkörper ist üblicherweise in Form eines sogenannten Wabenkörpers ausgebildet. Der wabenförmige Katalysatorträgerkörper ist beispielsweise ein monolithisches oder metallisches Basisbauteil.

Die auf den Katalysatorträgerkörper aufgebrachte Katalysatorträgerschicht ist vorzugsweise aus γ-Aluminiumoxid, θ-Aluminiumoxid, Siliziumdioxid, Zirkoniumoxid oder Titandioxid ausgebildet. Ferner kann die Katalysatorträgerschicht Träger eines katalytischen Edelmetalls sowie eines NOₓ-Absorptionsmaterials sein, wobei das katalytische Edelmetall beispielsweise Platin, Rhodium, Palladium oder Silber ist und das NOₓ-Absorptionsmaterial mindestens ein Element aus Alkalimetallen, Erdakalimetallen und Seltenerdmetallen aufweist.

In der Druckschrift DE 197 53 249 A1 ist ein Keramiknetzwerk, welches beispielsweise als Katalysatorträger einsetzbar ist, und ein Verfahren zur Herstellung dieses Keramiknetzwerkes offenbart. Das Keramiknetzwerk setzt sich aus dreidimensionalen Keramikstegen zusammen, wobei die Keramikstege einen runden oder nahezu runden Querschnitt aufweisen. Zur Herstellung der Keramikstege werden Polymer- und/oder Naturfasern in einer Keramiksuspension getränkt, anschließend getrocknet und gesintert. Das dadurch ausgebildete Keramiknetzwerk weist relativ geringe Abmessungen im Bereich von 40 x 40 x 20 mm³ bis 125 x 40 x 20 mm³ auf.

Die Druckschrift DE 698 09 475 T2 beschreibt einen Abgasreinigungskatalysator, dessen Basisbauteil eine Wabenstruktur besitzt und dessen Zellwandoberfläche als Katalysatorträgerschicht ausgebildet ist. Dabei wird als Katalysatorträgerschicht ein katalytisches Edelmetall, wie beispielsweise Platin, Rhodium oder Silber, und ein NOₓ-Absorptionsmaterial, wie zum Beispiel Lithium, Natrium, Magnesium, Kalzium oder Lanthan, verwendet. Das wabenförmige Basisbauteil besteht vorzugsweise aus einem wärmebeständigen anorganischen Oxid oder einem metallischen Basisbauteil. Die Zellenquerschnittsform kann in Form eines Polygons, kreisförmig oder quadratisch ausgebildet sein, wobei die Zellenkonzentration im Bereich von 93 bis 186 Zellen/cm² liegt.

Die in der Druckschrift DE 698 11 135 T2 beschriebene Vorrichtung beinhaltet einen Keramikwaben-Strukturkörper, welcher insbesondere als Katalysatorsubstrat zur Reinigung von Abgasen verwendet wird. Der Keramikwaben-Strukturkörper ist aus einer Vielzahl von Zellen, welche durch Zellwände definiert sind, ausgebildet. Um höheren Anforderungen, wie beispielsweise einer höheren Reinigungseffizienz und einem Einsatz bei höheren Temperaturen, nachkommen zu können, setzt die in der Druckschrift DE 698 11 135 T2 bezeichnete Vorrichtung auf eine Verjüngung der Zellwände. Um die Steifigkeit des Wabenkörpers trotz dünner Zellwände konstant zu halten, ist in den Eckabschnitten der offenen Zellen jeweils ein Verstärkungsabschnitt ausgebildet. Der Keramikwaben-Strukturkörper besteht beispielsweise aus Cordierit, einem Ringsilikat, welches vorzugsweise als Rohstoff für die Herstellung technischer Keramiken zum Einsatz kommt. Der Keramikwaben-Strukturkörper besitzt Gesamtabmessungen mit einer Länge von 150 mm und einem Durchmesser von 100 mm.

In der Druckschrift DE 199 36 354 A1 ist eine Vorrichtung zur photokatalytischen Umsetzung von Abgasen in einem Abgasreinigungssystem enthalten. Das Abgasreinigungssystem besteht aus einem Gehäuse und einem Abgasreiniger, wobei sich der Abgasreiniger unter anderem aus einer Vielzahl parallel angeordneter Flächen, die vorzugsweise aus parallel verlaufenden Röhren ausgebildet sind, zusammensetzt. Die Röhren verlaufen in Abgasströmungsrichtung und weisen an ihrer Abgaskontaktfläche ein photokatalytisch aktivierbares Katalysatormaterial auf. Ferner besitzt das Abgasreinigungssystem Lichtleiter, welche parallel zu den Abgaskontaktflächen angebracht sind und Licht hin zum photokatalytisch aktivierbaren Katalysatormaterial emittieren. Aufgrund der künstlichen Lichtbestrahlung wird ein photokatalytisch aktiver Abgasumsetzer bereitgestellt, dessen Vorteil in einer vergleichsweise höheren Umsetzung der Abgase liegt.

Aus der Druckschrift DE 42 41 451 A1 sind ein Verfahren und eine Vorrichtung zur Reinigung von Gasen, Abgasen, Dämpfen und Solen mittels photokatalytischer Reaktion bekannt. Zur Reinigung der Substrate wird hier ein hermetisch geschlossenes Gehäuse mit einem darin vorgesehenen, aus Katalysatorträger und Katalysator bestehenden Katalysatorfestbett, das sich auf einer drehbaren Achse befindet, genutzt. Die verwendeten Katalysatorträger bestehen vorzugsweise aus Matten, Gestricken, Geweben oder Vliesstoffen. Als Katalysatormaterial kommt TiO₂ zum Einsatz. Die zu reinigenden Substrate werden in das Gehäuse eingebracht, durchdringen das Katalysatorfestbett und werden danach wieder aus dem Gehäuse gebracht.

Die Druckschrift DE 697 29 513 T2 beinhaltet eine Filtervorrichtung mit einem Photokatalysator, der auf einer Oberfläche eines lichtleitenden Körpers aufgebracht ist. Als Photokatalysator wird u.a. TiO₂ verwendet. Der lichtleitende Körper kann beispielsweise aus Glas, Keramik, Kunststoff oder Kristall bestehen und in Form einer Faser, einer Bienenwabenstruktur, eines Maschennetzes, einer Watte, eines Stapels von lichtleitenden Schichten, eines Gewebes aus Photokatalysatorfasern, aus parallel gebündelten Photokatalyasatorfasern oder aus rohrförmig gebündelten Photokatalyasatorfasern ausgebildet sein. Zur Verbesserung der Photokatalyse-Reaktion wird Licht am Ende der lichtleitenden Körper und der Photokatalysatorfasern eingeleitet, wodurch das Licht direkt aus dem Inneren des lichtleitenden Trägerkörpers auf das photokatalytische Material trifft.

Die Druckschrift JP 2004313973 A beinhaltet einen photokatalytischen Filter, welcher einen porösen keramischen Körper umfasst, auf dem Keramikpartikel sowie eine photokatalytische Schicht aufgebracht sind. Der poröse keramische Körper weist eine dreidimensionale Netzstruktur auf. Diese Netzstruktur ist durch die Herstellung aus organischen Materialien bedingt. Der photokatalytische Filter selbst ist plattenartig ausgebildet.

In der Druckschrift JP 2004114669 A ist ein Verfahren zum Herstellen eines dreidimensionalen, permeablen Photokatalysator-Filters beschreiben, wobei eine zweidimensionale netzartige Grundstruktur die Grundlage für die ausgebildete dreidimensionale Skelettstruktur des Photokatalysator-Filters bildet. Die zweidimensionale Grundstruktur wird durch Verschweißen nebeneinander liegender, in Kurvenform abgelegter Kunstharzfäden unterschiedlicher Durchmesser hergestellt. Durch Zusammenrollen der zweidimensionalen Grundstruktur wird dann die Skelettstruktur des Photokatalysators hergestellt. Auf der Oberfläche der Skelettstruktur wird zunächst eine Klebstoffschicht ausgebildet, auf die dann pulverisiertes Titandioxid aufgebracht wird. Der Photokatalysator wird in einem Behälter, also in einem geschlossenen System, verwendet.

In der Druckschrift JP 2006255529 A ist ein keramischer Photokatalysator-Filter zur Verwendung in einer Lüftungsanlage offenbart, wobei der Photokatalysator-Filter in einem Gehäuse des Luftreinigers untergebracht ist. Der Photokatalysator-Filter umfasst eine Substratschicht und eine darauf ausgebildete photokatalytische Schicht. Die Substratschicht weist eine dreidimensionale keramische Netzstruktur auf und ist plattenartig ausgebildet.

Die Druckschrift JP 2007105649 A beinhaltet einen Luftreiniger in Form einer Box, wobei in der Box mehrere parallel zueinander angeordnete, luftdurchlässige, mit photokatalytischen Titandioxidpartikeln versetzten Vliesstoffplatten angeordnet sind. Darüber hinaus weist die Box an ihren Innenseiten eine Lackflim auf, der Titandioxid enthält. Die zu reinigende Luft wird in die Box eingebracht und gelangt durch Luftlöcher wieder nach außen. Zur Unterstützung der photokaalytischen Reaktion sind im Inneren der Box LED-Lampen vorgesehen.

Aus der Druckschrift JP H09105120 A ist eine Wasserreinigungsvorrichtung bekannt, welche ein Hohlrohr aufweist, in dessen Inneren ein Körper aus einer porösen Keramik vorgesehen ist. Auf der Oberfläche der porösen Keramik ist eine Schicht aus photokatalytischem Material vorgesehen.

Das typische Einsatzgebiet der oben beschriebenen Katalysatoren liegt in der Reinigung von Fahrzeugabgasen. Sie sind hierfür entweder direkt in einem Motorabgaskanal oder in einem Fahrgastraum eines Fahrzeuges vorgesehen. Entsprechend weisen diese Katalysatoren an die jeweiligen Einbauorte angepasste Abmessungen auf und können dadurch nur eine begrenzte Menge an Schadstoffen umsetzen. Ferner besitzen die bekannten Katalysatoren im Wesentlichen zumeist eine in sich geschlossene Struktur, wobei das Katalysatormaterial vorzugsweise im Inneren des Katalystatorträgerkörpers vorgesehen ist. Wie die Druckschrift DE 199 36 354 A 1 zeigt, muss teilweise künstliches Licht in den Katalysatorträgerkörper eingebracht werden, um eine photokatalytische Reaktion hervorzurufen. Weiterhin werden in der Regel nur erzwungene, strömungsabhängige Luftmassen unter Verwendung des Katalysators umgesetzt. Die aus dem Stand der Technik bekannten, auf Photokatalyse basierenden Katalysatoren weisen daher eine relativ geringe Effizienz in der Schadstoffumsetzung auf. Für eine wirksame Reinigung von großen Luftmengen, wie beispielsweise der Luft in innerstädtischen Bereichen, sind die bekannten Katalysatoren daher nicht geeignet.

Es ist daher die Aufgabe der vorliegenden Erfindung, eine Vorrichtung zur photokatalytischen Reinigung von Umgebungsluft mit einem hohen Wirkungsgrad zur Verfügung zu stellen.

Die Aufgabe wird erfindungsgemäß durch einen Katalysatorträgerkörper mit wenigstens einem photokatalytisch aktivierbaren Katalysatormaterial gelöst, wobei der Katalysatorträgerkörper ein dreidimensionales, luft- und lichtdurchlässiges Gebilde ist, das aus einer Mehrzahl von einzelnen, miteinander verbundenen Stegen zusammengesetzt ist, wobei das photokatalytisch aktivierbare Katalysatormaterial wenigstens an Oberflächen der Stege vorgesehen ist, wobei der Katalysatorträgerkörper aus den Stegen zu einer wenigstens ein Gitter aufweisenden Gitterstruktur zusammengesetzt ist, und wobei die Stege diagonal einander flächig und räumlich gegenüber liegende Eckpunkte des wenigstens einen Gitters verbinden.

Anders als im Stand der Technik handelt es sich bei der vorliegenden Erfindung um einen dreidimensionalen, luft- und lichtdurchlässigen Katalysatorträgerkörper, welcher sich aus mehreren Stegen zusammensetzt, wobei diese photokatalytisch aktivierbares Katalysatormaterial wenigstens an ihren Oberflächen aufweisen. Durch seine Luftdurchlässigkeit eignet sich der erfindungsgemäße Katalysatorträgerkörper insbesondere zur Reinigung frei zirkulierender Luft, wobei kein erzwungener Luftstrom erforderlich ist, um Luftmassen in den Katalysatorträgerkörper einzubringen und dort umzusetzen.

Desweiteren weist der erfindungsgemäße Katalysatorträgerkörper im Vergleich zum Stand der Technik eine gute Zugänglichkeit für Umgebungslicht bis hin in seine inneren Bereiche auf, sodass auf zusätzliche künstliche Lichtquellen zur Einbringung von Licht in das Innere des Katalysatorträgerkörpers verzichtet werden kann. Aufgrund dieser guten Lichtzugänglichkeit wird die Reaktionsfähigkeit des Katalysatormaterials und somit der Wirkungsgrad der photokatalytischen Vorrichtung im Vergleich zum Stand der Technik deutlich erhöht.

Insbesondere die Ausbildung des photokatalytisch aktivierbaren Materials an der Oberfläche der Stege ermöglicht eine ideale Zugänglichkeit von Umgebungslicht zu dem infolge von Lichteinwirkung reaktionsauslösenden Katalysatormaterial und bewirkt somit einen sehr hohen Wirkungsgrad einer auf Basis des erfindungsgemäßen Katalysatorträgerkörpers arbeitenden Luftreinigungsvorrichtung.

Die das Katalysatormaterial aufweisende Oberfläche der Stege bildet bei gleichen Abmessungen eine wesentlich größere Reaktionsfläche für die Photokatalyse aus, als dies bei Katalysatorträgerkörpern, bei denen das photokatalytisch aktivierbare Material an Innenwänden angebracht ist, möglich ist.

Dadurch dass zur Ausbildung des erfindungsgemäßen Katalysatorträgerkörpers mehrere Stege zu einem dreidimensionalen Gebilde verbunden werden, sind diese Stege in unterschiedlichen Raumrichtungen ausgerichtet. Dies ermöglicht eine photokatalytische Reaktion unabhängig von der Richtung und dem Einfallswinkel des Lichtes in den Katalysatorträgerkörper.

Ferner bewirkt die Ausbildung des Katalysatorträgerkörpers aus mehreren miteinander verbundenen Stegen eine hohe Stabilität in Verbindung mit einem geringen Gewicht. Der ausgebildete Katalysatorträgerkörper ist dadurch in der Lage, vorteilhaft sowohl Zug- als auch Druckkräfte aufzunehmen.

Weiterhin bietet der dreidimensionale luft- und lichtdurchlässig ausgebildete Katalysatorträgerkörper den Vorteil, dass er ohne Weiteres Witterungsbedingungen ausgesetzt werden kann. Dadurch können beispielsweise Verschmutzungen an der Oberfläche der Stege des Katalysatorträgerkörpers oder auch Reaktionsprodukte aus der Photokatalyse, wie zum Beispiel Nitrate, gegebenenfalls durch Regen von den Stegen des Katalysatorträgerkörpers abgewaschen werden.

Bei dem erfindungsgemäßen Katalysatorträgerkörper verbinden die Stege diagonal einander flächig und/oder räumlich gegenüber liegende Eckpunkte des wenigstens einen Gitters miteinander. Die so am Katalysatorträgerkörper ausgebildeten Querverbindungen nehmen Sonneneinstrahlung aus unterschiedlichen Raumrichtungen und/oder unter unterschiedlichen Einfallswinkeln auf, wodurch sich ein besonders hoher Wirkungsgrad einer mit dem erfindungsgemäßen Katalysatorträgerkörper ausgebildeten Katalysatorvorrichtung ergibt. Des Weiteren steigern die Querverbindungen die Steifigkeit des Katalysatorträgerkörpers und bieten zusätzliche Reaktionsfläche für die Photokatalyse.

Die Eckpunkte des Gitters können dabei so gestaltet sein, dass sie geeignete Verbindungsmodule für die Stege ausbilden. So können die Stege beispielsweise in solche Verbindungsmodule gesteckt oder geschraubt werden. Dadurch ist es möglich, den Katalysatorträgerkörper aus einzelnen Stegen rasch aufbauen und wieder geeignet abbauen zu können. Die einzelnen Stege und die Verbindungsmodule können dadurch zudem einfach gelagert und zu einer Aufbaustelle transportiert werden.

Ein besonderer Vorteil der vorliegenden Erfindung besteht darin, dass der Katalysatorträgerkörper ein freistehender Körper ist, der nicht von einem Gehäuse umgeben ist. Damit kann der erfindungsgemäße Katalysatorträgerkörper beispielsweise inmitten eines Stadtzentrums oder Gewerbeparks oder einer sonstigen Umgebung, deren Luft sauber gehalten werden soll, aufgestellt werden und dort direkt die Luft reinigen. Die Luft gelangt dabei von außen direkt auf die Stege des Katalysatorträgerkörpers, auf welchen das photokatalytische Material vorgesehen ist, und muss nicht aufwändig zum photokatalytischen Material hingeleitet werden.

Gemäß einer vorteilhaften Ausgestaltung der vorliegenden Erfindung setzen sich die Stege zu einer wenigstens ein quader-, würfel-, kugel-, kegel- oder zylinderförmiges Gitter aufweisenden Gitterstruktur zusammen. Die Ausbildung des Gitters als Quader, Würfel, Kugel, Kegel oder Zylinder bietet den Vorteil, dass die ausgebildete Gitterstruktur eine hohe Steifigkeit aufweist, wobei die Gitterstruktur in der Lage ist, sowohl Zug- als auch Druckkräfte aufzunehmen. Ferner bietet die variable Formgebung unter anderem die Möglichkeit, den Katalysatorträgerkörper an unterschiedliche Umgebungsbedingungen optimal anzupassen.

In einem vorteilhaften Ausführungsbeispiel der vorliegenden Erfindung weisen die Stege des Katalysatorträgerkörpers eine Länge in einem Bereich von 15 cm bis 200 cm auf. Ferner besitzt der Katalysatorträgerkörper in einer bevorzugten Ausgestaltung eine Gesamtlänge von größer 3m, vorzugsweise in einem Bereich von 3 m bis 20 m, eine Gesamtbreite von größer 3m, vorzugsweise in einem Bereich von 3 m bis 20 m, und eine Gesamthöhe von größer 3m, vorzugsweise in einem Bereich von 3 m bis 20 m. Die Breite oder der Durchmesser der Stege liegt vorzugsweise in einem Bereich von 5 cm bis 20 cm. Die im Vergleich zum Stand der Technik großen Abmessungen des erfindungsgemäßen Katalysatorträgerkörpers bieten unter anderem den Vorteil, dass mit ihm vergleichsweise große Luftvolumina gereinigt werden können. Ferner kann der erfindungsgemäße Katalysatorträgerkörper aufgrund seiner Größe und grundsätzlich frei gestaltbaren Architektur zur Verschönerung vieler verschiedener Bereiche, wie zum Beispiel in Innenstädten oder Industriegebieten, Anwendung finden.

Es ist besonders empfehlenswert, wenn die Stege des erfindungsgemäßen Katalysatorträgerkörpers aus Kunststoffröhren ausgebildet sind, wobei die Oberflächen der Stege wenigstens eine Beschichtung mit dem photokatalytisch aktivierbaren Katalysatormaterial aufweisen. Das An- und/oder Aufbringen des photokatalytisch aktivierbaren Materials an der und/oder auf die Oberfläche der Stege hat den Vorteil, dass grundsätzlich eine variable Schichtdicke des photokatalytisch aktivierbaren Materials an und/oder auf den Stegen vorgesehen werden kann, da die Schichtdicke nicht durch geometrische Randbedingungen begrenzt wird. Ein weiterer positiver Effekt im Aufbringen der Katalysatorschicht auf der Oberfläche der Stege liegt darin, dass diese leicht ausbesserbar oder erneuerbar ist. Des Weiteren ist die Ausbildung der Stege als Kunststoffröhren als vorteilhaft anzusehen, da damit das Gewicht des Katalysatorträgerkörpers insgesamt gering gehalten werden kann.

In einem besonders bevorzugten Ausführungsbeispiel der vorliegenden Erfindung ist oder enthält das photokatalytisch aktivierbare Katalysatormaterial Titandioxid. Titandioxid erweist sich aufgrund seiner hohen Photoaktivität hinsichtlich chemischer Umwandlungsreaktionen als besonders geeignet, da bei der Photokatalyse die Reaktionsgeschwindigkeit einer chemischen Reaktion mittels Licht in Anwesenheit eines Katalysators mit hoher Photoaktivität stark erhöht werden kann. Des Weiteren ist Titandioxid vorteilhaft, weil es ungiftig, langzeitstabil und preiswert ist.

In einer ebenfalls günstigen Variante der Erfindung weisen die Stege wenigstens eine superhydrophile Oberfläche auf. Durch die superhydrophile Oberfläche der Stege wird die Fähigkeit zur Selbstreinigung des Katalysatorträgerkörpers verstärkt. Aufgrund der Superhydrophilie perlt Wasser schneller von der Oberfläche ab und nimmt dabei gegebenenfalls ansässige Schmutzpartikel und/oder Reaktionsprodukte der Photokatalyse mit.

In einer günstigen Weiterbildung der vorliegenden Erfindung weist der Katalysatorträgerkörper ein aus starren Stegen ausgebildetes Außengerüst und eine aus flexiblen Stegen ausgebildete Innenstruktur auf. Eine Ausbildung des Außengerüstes aus starren Stegen verleiht dem Katalysatorträgerkörper eine stabile Form. Aufgrund der Biegbarkeit und des geringeren Gewichtes der flexiblen Stege wird ein Auf- und Abbau des Katalysatorträgerkörpers vereinfacht.

Vorzugsweise sind die starren Stege des Außengerüstes als Rohre und/oder Stäbe und die flexiblen Stege der Innenstruktur als Schläuche und/oder Schnüre ausgebildet. Die Ausbildung der starren Stege als Stäbe verleiht dem erfindungsgemäßen Katalysatorträgerkörper eine hohe Steifigkeit, wohingegen eine Ausbildung der starren Stege als Rohre Gewichtsvorteile mit sich bringt. Ferner weisen flexible Stege, welche in Form von Schnüren ausgebildet sind, gegebenenfalls eine höhere Zugfestigkeit als als Schläuche ausgebildete flexible Stege auf. Schläuche haben ebenso wie Rohre gegenüber Stäben oder Schnüren den Vorteil, dass sie ein geringeres Gewicht besitzen und gegebenenfalls für eine Verlegung von Elektroleitungen o. ä. im Inneren der Schläuche oder Rohre verwendet werden können. Ferner kann ausschlaggebend für die jeweils gewählte Ausführungsform der Stege beispielsweise die vorhandene Lichteinstrahlung und/oder der Wunsch nach einer möglichen Flächenmaximierung sein. Durch die jeweilige Ausbildung der Stege kann beispielsweise auch das Gesamtgewicht des Katalysatorträgerkörpers an gegebene Bodenbedingungen optimal angepasst werden.

In einer weiteren Ausführungsform der vorliegenden Erfindung sind in den als Rohre und/oder Schläuche ausgebildeten Stegen wenigstens teilweise als Elektroleitungen vorgesehen. Die Elektroleitungen können beispielsweise zum Anschluss zusätzlicher künstlicher Lichtquellen oder einer Elektroversorgung einer Reinigungsanlage für den Katalysatorträgerkörper verwendet werden. Dabei können die Elektroleitungen einfach in den als Rohre und/oder Schläuche ausgebildeten Stegen verlegt werden und sind somit nach außen hin nicht sichtbar, wodurch sich eine vorteilhafte Optik des erfindungsgemäßen Katalysatorträgerkörpers bei gleichzeitig hoher Funktionalität ergibt.

Eine vorteilhafte Ausgestaltung des Katalysatorträgerkörpers wird in einer Variante der vorliegenden Erfindung dadurch erreicht, dass die starren Stege aus Kunststoff und/oder aus Metall und/oder aus wenigstens einer Metalllegierung und/oder aus Glas und/oder aus Faserverbundwerkstoffen und/oder aus Holz ausgebildet sind, und die flexiblen Stege aus textilem Material und/oder aus Kautschuk und/oder aus Kunststoff ausgebildet sind. Dabei kann das jeweils verwendete Stegmaterial optimal an die jeweiligen Anforderungen des Katalysatorträgerkörpers und/oder an Umweltbedingungen angepasst werden, um insbesondere eine lange Lebensdauer einer mit dem erfindungsgemäßen Katalysatorträgerkörper ausgestalteten Katalysatorvorrichtung zu erzielen.

Gemäß einer günstigen Weiterbildung der Erfindung sind die starren Stege teleskopartig und/oder die flexiblen Stege mit einer Schnalle in ihrer Länge verstellbar. Die längenverstellbaren Stege zeichnen insbesondere dadurch aus, dass sie Lagerung, Transport und/oder Aufbau des Katalysatorträgerkörpers, im Vergleich zu in ihrer Länge konstanten Stegen, aufgrund eines besseren Handlings und/oder einer besseren Anpassbarkeit an die bestehenden konstruktiven Bedingungen erleichtern können.

Es ist besonders empfehlenswert, die Stege mittels Bolzen, Schweiß-, Klebe-, Schraub- und/oder Steckverbindungen miteinander zu verbinden. Je nach Auswahl der Stegverbindung kann der Katalysatorträgerkörper beispielsweise bei Verwendung von Steckverbindungen als modulares oder zum Beispiel beim Einsatz von Schweißverbindungen als festes System ausgebildet werden. Eine Ausbildung als modulares System bietet sich beispielsweise an, um den Auf- und/oder Abbau des Katalysatorträgerkörpers zu erleichtern, was zum Beispiel erforderlich sein kann, wenn der Katalysatorträgerkörper zu einem späteren Zeitpunkt seinen Standort wechseln soll. Ein festes System bietet den Vorteil, dass die Verbindungen der Stege gegebenenfalls beanspruchbarer sind und der Katalysatorträgerkörper damit eine höhere Steifigkeit aufweist. Ferner wird die Verwendung unterschiedlicher Materialien bei der Ausbildung der Stege durch den Einsatz der Stegverbindungen unterstützt.

Gemäß einer vorteilhaften Ausgestaltung der vorliegenden Erfindung ist das photokatalytisch aktivierbare Katalysatormaterial entweder als Beschichtung auf den Stegen vorgesehen, oder die Stege bestehen komplett aus dem photokatalytisch aktivierbaren Katalysatormaterial. Die jeweilig verwendete Ausführungsform ist von der mechanischen und chemischen Stabilität sowie von den jeweiligen Materialkosten des Katalysatormaterials abhängig.

In einer weiteren vorteilhaften Variante der Erfindung sind die Knotenpunkte der Stege aus lichtreflektierendem Material ausgebildet. Lichtreflektierendes Material fördert den Zugang von Licht zu den Oberflächen der Stege. Beispielsweise sind durch das an den Knotenpunkten angebrachte lichtreflektierende Material auch sonst für Licht vorrübergehend unerreichbare Stege gut beleuchtbar, wodurch diese photokatalytisch aktiviert werden und somit den Wirkungsgrad der Photokatalysevorrichtung erhöhen.

In einem anderen Ausführungsbeispiel der vorliegenden Erfindung weist der Katalysatorträgerkörper Spiegel und/oder andere Licht in das Innere des Katalysatorträgerkörpers reflektierende oder projizierende Objekte auf. Am Katalysatorträgerkörper angebrachte Spiegel und/oder andere reflektierende oder projizierende Objekte erhöhen, ebenso wie lichtreflektierende Materialien, die Lichtdurchdringung des Katalysatorträgerkörpers und unterstützen damit die Photokatalyse.

Ebenfalls empfehlenswert ist es, wenn der Katalysatorträgerkörper über einem Wasserbecken oder einer anderen lichtreflektierenden Fläche positioniert ist. Lichtreflektierende Flächen, welche unter dem Katalysatorträgerkörper angebracht sind, unterstützen die photokatalytische Reaktion der zum Boden gerichteten Flächen der Stege und steigern somit die photokatalytische Reaktion an dem Katalysatorträgerkörper.

Gemäß einer vorteilhaften Ausgestaltung der vorliegenden Erfindung ist der Katalysatorträgerkörper motorisiert neig- und/oder drehbar. Diese Ausgestaltung ermöglicht eine veränderbare Positionierung des Katalysatorträgerkörpers, beispielsweise im Hinblick auf die Sonnenlaufbahn, und somit eine optimale Ausnutzung der photokatalytisch wirksamen Fläche des Katalysatorträgerkörpers. Ferner kann der Katalysatorträgerkörper hierdurch stabil auf unterschiedlichen Untergründen aufgestellt werden.

In einem besonders bevorzugten Ausführungsbeispiel der vorliegenden Erfindung weist der Katalysatorträgerkörper wenigstens eine künstliche Lichtquelle auf, womit insbesondere an Tagen oder Tageszeiten mit geringer oder gar keiner Sonneneinstrahlung die photokatalytische Reaktion unterstützt werden kann.

Es ist besonders günstig, wenn der Katalysatorträgerkörper eine Bewässerungs- oder Reinigungsvorrichtung aufweist. Eine zusätzlich an dem Katalysatorträgerkörper vorgesehene Bewässerungs- oder Reinigungsanlage kann zur kontinuierlichen oder bedarfsgemäßen Reinigung des Katalysatorträgerkörpers genutzt werden, wodurch die photokatalytische Reaktion aufgrund des infolge Reinigung verbesserten Licht- und Gaszuganges verbessert und somit der Wirkungsgrad der Katalysatorvorrichtung erhöht wird.

Bevorzugte Ausführungsformen der Erfindung, deren Aufbau, Funktion und Vorteile, werden im Folgenden anhand von Figuren näher erläutert, wobei
- Figur 1: schematisch eine mögliche Ausgestaltung eines erfindungsgemäßen Katalysatorträgerkörpers in einer perspektivischen Vorderansicht zeigt, wobei das Wirkprinzip des Katalysatorträgerkörpers in einer schematisch dargestellten Umgebung veranschaulicht ist;
- Figur 2: schematisch eine mögliche Ausgestaltung eines Steges einer Ausführungsform des erfindungsgemäßen Katalysatorträgerkörpers in einer Schnittdarstellung zeigt;
- Figur 3: schematisch ein weiteres Ausführungsbeispiel eines erfindungsgemäßen Katalysatorträgerkörpers in einer perspektivischen Vorderansicht mit zwischen Stegen des Katalysatorträgerkörpers vorgesehenen Knotenpunkten zeigt;
- Figur 4: schematisch eine weitere Variante eines erfindungsgemäßen Katalysatorträgerkörpers in einer perspektivischen Vorderansicht zeigt, wobei Spiegel im Inneren des Katalysatorträgerkörpers vorgesehen sind;
- Figur 5: schematisch eine weitere Ausführungsform eines erfindungsgemäßen Katalysatorträgerköpers in einer perspektivischen Vorderansicht zeigt, wobei der Katalysatorträgerkörper in seinem Inneren einen Spiegel und künstliche Lichtquellen aufweist; und
- Figur 6: schematisch eine weitere Ausgestaltungsmöglichkeit eines erfindungsgemäßen Katalysatorträgerkörpers in einer perspektivischen Vorderansicht zeigt, wobei künstliche Lichtquellen und eine Reinigungsanlage am Katalysatorträgerköper vorgesehen sind.

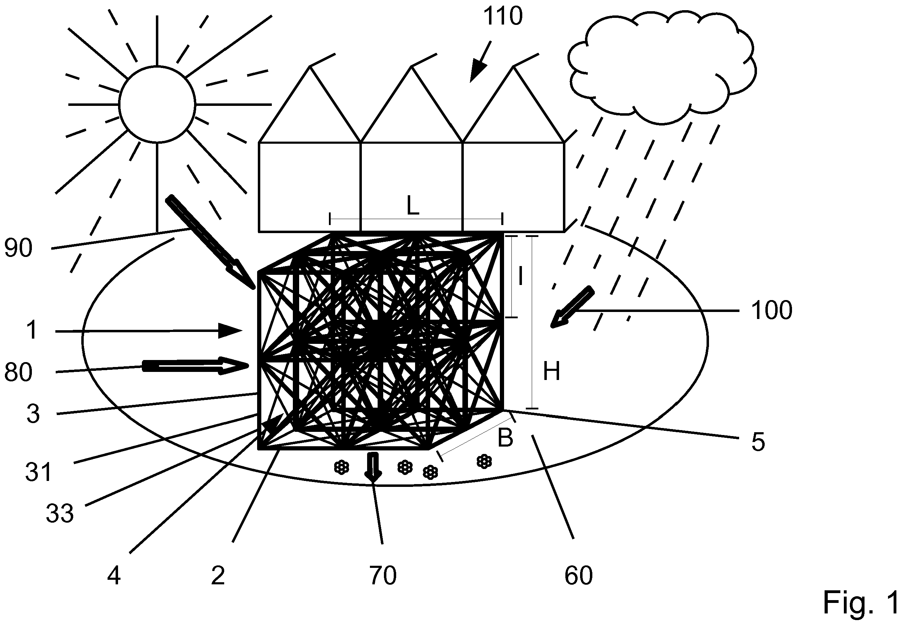

Figur 1 zeigt schematisch eine mögliche Ausgestaltung eines erfindungsgemäßen Katalysatorträgerkörpers 1 in einer perspektivischen Vorderansicht. In Figur 1 ist der Katalysatorträgerkörper 1, ebenfalls rein schematisch, in einer möglichen Umgebung dargestellt, deren Luft durch die auf Basis des Katalysatorträgerkörpers 1 ausgebildete Katalysatorvorrichtung gereinigt werden soll, indem Schadstoffe so durch photokatalytisch aktivierte chemische Reaktion(en) neutralisiert werden.

Der in Figur 1 gezeigte Katalysatorträgerkörper 1 weist eine würfelförmige Gitterstruktur auf, welche sich aus einer Vielzahl von würfelförmigen Einzelgittern 4 zusammensetzt.

Die würfelförmigen Einzelgitter 4 sind durch eine Mehrzahl miteinander verbundener Stege 3, welche photokatalytisch aktivierbares Katalysatormaterial 2 an ihren Oberflächen aufweisen, ausgebildet.

Der Katalysatorträgerkörper 1 kann in anderen, nicht gezeigten Ausführungsformen der vorliegenden Erfindung auch quader-, kugel-, kegel- und/oder zylinderförmig ausgestaltet sein. Die Ausbildung des Katalysatorträgerkörpers 1 als würfelförmige Gitterstruktur bietet jedoch den Vorteil, dass der Katalysatorträgerkörper 1 eine hohe Standfestigkeit aufweist und ein symmetriebedingter leichter Aufbau ermöglicht wird.

Die die würfelförmige Gitterstruktur bildenden, würfelförmigen Einzelgitter 4 werden aus den Stegen 3 gebildet. Die Stege 3 verbinden dabei vertikal, horizontal und diagonal flächig und räumlich einander gegenüberliegende Eckpunkte 5 des jeweiligen würfelförmigen Einzelgitters 4. Dabei können die Stege 3 an den Eckpunkten 5 des jeweiligen Einzelgitters 4 mittels Bolzen, Schweiß-, Klebe-, Schraub und/oder Steckverbindungen zusammengefügt sein.

Mit der Ausformung des Katalysatorträgerkörpers 1 als Gitterstruktur, die aus Stegen 3 ohne jegliche Seitenwände ausgebildet ist, entsteht, im Gegensatz zu den im Stand der Technik bekannten Katalysatorvorrichtungen, ein licht- und luftdurchlässiges Gebilde, welches optimal Umgebungsluft und Sonnenlicht 90 für eine photokatalytische Reaktion aufnehmen kann.

In der Figur 1 dargestellten Ausführungsform des erfindungsgemäßen Katalysatorträgerkörpers 1 sind die Stege 3 jeweils aus Kunststoffröhren 31 ausgebildet, welche photokatalytisch aktivierbares Katalysatormaterial 2 an ihren Oberflächen aufweisen. In anderen, nicht gezeigten Ausführungsformen der Erfindung kann für die Ausbildung der Stege 3 auch ein anderes Material als Kunststoff, wie beispielsweise Metall oder ein natürlicher Baustoff, verwendet werden. Ferner können die Stege 3 auch vollständig aus dem photokatalytisch aktivierbaren Katalysatormaterial 2 ausgebildet sein.

Das photokatalytisch aktivierbare Katalysatormaterial 2 enthält in dem gezeigten Beispiel Titandioxid, das sich unter anderem durch seine hohe Photoaktivität auszeichnet. In weiteren Ausführungsformen des erfindungsgemäßen Katalysatorträgerkörpers 1 kann das photokatalytisch aktivierbare Katalysatormaterial 2 auch aus einem anderen Material, wie beispielsweise Siliziumdioxid oder Zirkoniumoxid, ausgebildet sein.

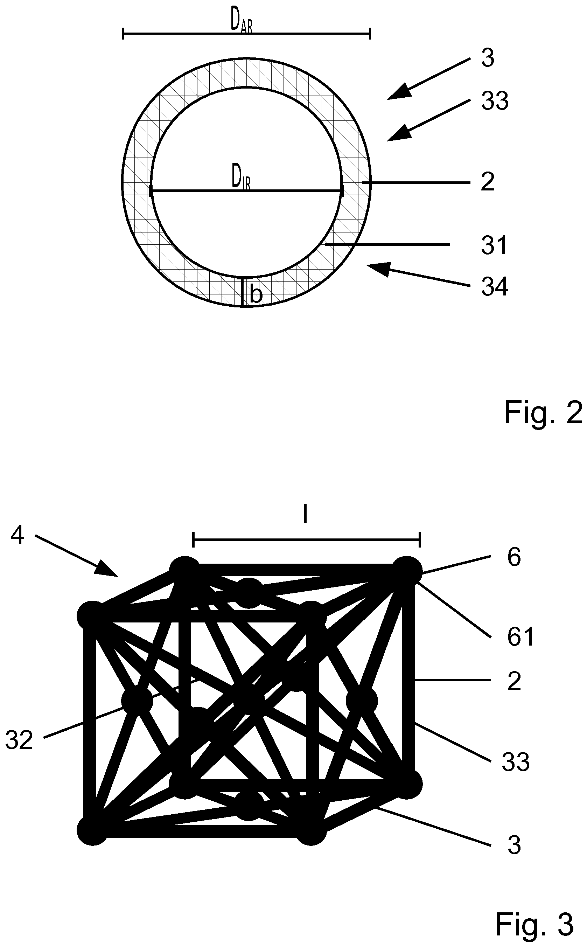

Das an und/oder auf der Oberfläche der Stege 3 vorgesehene photokatalytisch aktivierbare Katalysatormaterial 2 bietet, im Vergleich zu photokatalytisch aktivierbarem Katalysatormaterial, was im Inneren von Katalysatorträgerkörpern 1 angebracht ist, den Vorteil, dass das photokatalytisch aktivierbare Katalysatormaterial 2 besonders gut für das Sonnenlicht 90 zugänglich ist. Des Weiteren ermöglicht das an der Oberfläche der Stege 3 beispielsweise in Form einer Beschichtung vorgesehene photokatalytisch aktivierbare Katalysatormaterial 2, dass die beispielsweise in Figur 2 gezeigte Schichtdicke b des aufgebrachten photokatalytisch aktivierbaren Katalysatormaterials 2 variierbar ist.

Zudem bringt die Ausbildung der Stege 3 aus Kunststoffröhren 31, wie in Figur 1, den Vorteil mit sich, dass das Gesamtgewicht des erfindungsgemäßen Katalysatorträgerkörpers 1 insgesamt gering gehalten werden kann.

In weiteren Ausgestaltungsvarianten des Katalysatorträgerkörpers 1 können die Stege 3, wie beispielsweise in Figur 3 gezeigt, auch optional als flexible Stege 32 und/oder starre Stege 33 ausgebildet werden, wobei die flexiblen Stege 32 Schläuche oder Schnüre und die starren Stege 33 Rohre oder Stäbe sein können. Des Weiteren können die flexiblen Stege 32 in weiteren Varianten des erfindungsgemäßen Katalysatorträgerkörpers 1 aus textilem Material, Kautschuk und/oder Kunststoff und die starren Stege 33 aus Kunststoff, Metall, Metalllegierungen, Glas, Faserverbundwerkstoff und/oder Holz ausgebildet sein.

Ferner weisen die in Figur 1 veranschaulichten Stege 3 eine superhydrophile Oberfläche auf, womit der Effekt der Fähigkeit der Selbstreinigung des Katalysatorträgerkörpers 1 verstärkt wird. Aufgrund der Superhydropholie perlt Wasser, wie beispielsweise in Figur 1 gezeigte Regenwasser 100, schneller von den Stegen 3 ab und nimmt dabei gegebenenfalls ansässige Schmutzpartikel und/oder Reaktionsprodukte der Photokatalyse, wie es in Figur 1 durch das Bezugszeichen 70 veranschaulicht ist, mit. Saubere Oberflächen der Stege 3 verbessern die Licht- und Luftzugänglichkeit zu dem photokatalytisch aktivierbaren Katalysatormaterial 2, womit der Wirkungsgrad der Katalysatorvorrichtung gesteigert wird.

Die in Figur 1 veranschaulichte würfelförmige Gitterstruktur des Katalysatorträgerkörpers 1 weist infolge ihrer Zusammensetzung aus einzelnen würfelförmigen Einzelgittern 4 eine Gesamtlänge L, eine Gesamtbereite B und eine Gesamthöhe H auf, welche ein Vielfaches der Länge, Breite und Höhe eines würfelförmigen Einzelgitters 4 ist. In dem gezeigten Ausführungsbeispiel sind die (Gesamt-)länge, die (Gesamt-)breite und die (Gesamt-)höhe des Katalysatorträgerkörpers 1 gleich groß, können jedoch in anderen Ausführungsformen der Erfindung auch unterschiedlich sein. Beispielsweise kann die Gesamtlänge L, die Gesamtbreite B und/oder die Gesamthöhe H des Katalysatorträgerkörpers 1 in einem Bereich von 3 m bis 20 m, vorzugsweise zwischen 4 m und 10 m, besonders bevorzugt bei 4 m bis 6 m, liegen.

Aufgrund der vorzugsweise großen Abmessungen des Katalysatorträgerkörpers 1 ist dieser in der Lage große Luftvolumina zu reinigen und damit einen großen Beitrag zum Umweltschutz zu leisten.

In weiteren Ausgestaltungsformen des erfindungsgemäßen Katalysatorträgerkörpers 1 können die Abmessungen des Katalysatorträgerkörpers 1 in Abhängigkeit von der ausgebildeten Gitterstrukturform und dessen Anwendungsgebiet unterschiedliche Größen bzw. Größenverhältnisse annehmen. Die verwendeten Stege 3 können hierfür beispielsweise eine Länge von 15 cm bis 200 cm, vorzugsweise von 20 cm bis 100 cm, besonders bevorzugt von 50 cm aufweisen.

Ein mögliches Anwendungsbeispiel des erfindungsgemäßen Katalysatorträgerkörpers 1 liegt, wie in Figur 1 dargestellt, in der Reduktion von Schadstoffen 80 in innerstädtischen Bereichen 110. Ferner kann der Katalysatorträgerkörper 1 in anderen Anwendungsfällen auch beispielsweise in Industrie- und Gewerbegebieten, an viel befahrenen Straßen oder in anderen urbanen Bereichen zum Einsatz kommen.

Ausschlaggebend für die photokatalytische Reaktion und damit die Luftreinigung durch den Katalysatorträgerkörper 1 ist das photokatalytisch aktivierbare Katalysatormaterial 2, welches an den Oberflächen der den Katalysatorträgerkörper 1 ausbildenden Stege 3 vorgesehen ist.

Einfallendes Sonnenlicht 90 liefert dabei die notwendige Energie für die Photokatalyse. Durch Bestrahlung des photokatalytisch aktivierbaren Katalysatormaterials 2, das beispielsweise aus Titandioxid besteht, mit dem Sonnenlicht 90 und/oder durch äußere und/oder innere künstliche Lichtquelle(n) wird das Katalysatormaterial 2 zu einer höheren Reaktivität angeregt, wodurch sogenannte Elektronen-Loch-Paare entstehen. Die Elektronen-Loch-Paare diffundieren an die Oberfläche des photokatalytisch aktivierbaren Katalysatormaterials 2, wo sie sogenannte Radikale bilden. Als Radikale werden Atome oder Moleküle bezeichnet werden, welche besonders reaktionsfreudig sind. Die Radikale wandeln an der Oberfläche der Stege 3 die Schadstoffe 70, wie beispielsweise Kohlenwasserstoffe, NOₓ, CO oder SOₓ, in umweltfreundliche Reaktionsprodukte, wie z. B. Nitrate, um, welche beispielsweise als Pflanzendünger verwendet werden können.

Der in Figur 1 in dem innerstädtischen Bereich 110 aufgestellte erfindungsgemäße Katalysatorträgerkörper 1 kann ferner ohne Weiteres allen Witterungsbedingungen ausgesetzt werden. So unterstützt neben dem direkten Sonnenlicht 90 auch Regenwasser 100 den photokatalytischen Effekt des Katalysatorträgerkörpers 1. Regenwasser 100 spült zum einen ansässige Schmutzpartikel vom Katalysatorträgerkörper 1 ab, womit der Licht- und Luftzugang zu dem Katalysatormaterial 2 erhöht wird, zum anderen können durch das Regenwasser 100 auch sich auf den Stegen 3 abgelagerte Reaktionsprodukte der Photokatalyse von den Stegen 3 abgewaschen und dadurch beispielsweise, wie es durch das Bezugszeichen 70 veranschaulicht ist, in den Boden unter den Katalysatorträgerkörper 1 gespült werden.

Der Katalysatorträgerköper 1 wirkt somit luftreinigend und kann ferner beispielsweise als Dünger zum Wachstum von Pflanzen genutzt werden. Besonders in Problemregionen mit hoher Verkehrsdichte oder großer industriell bewirtschafteter Fläche verbessert der Einsatz des Katalysatorträgerkörpers 1 die schadstoffbelastete Luft erheblich.

Figur 2 zeigt schematisch eine mögliche Ausgestaltung der Stege 3 einer Ausführungsform des erfindungsgemäßen Katalysatorträgerkörpers 1 in einer Schnittdarstellung. Dabei bezeichnen gleiche Bezugszeichen wie in Figur 1 gleiche Komponenten.

Die in Figur 2 beispielhaft gezeigten Stege 3 weisen einen runden, innen hohlen Querschnitt 34 auf, wobei die Stege 3 als Röhren 31 ausgebildet sind. Das zur Photokatalyse notwendige photokatalytisch aktivierbare Katalysatorträgermaterial 2 ist mit einer entsprechend variablen Schichtdicke b auf der Oberfläche der Stege 3 vorgesehen. Das Vorsehen des photokatalytisch aktivierbaren Materials 2 auf der Oberfläche der Stege 3 bietet den Vorteil, dass es dort ideal Licht, wie beispielsweise das Sonnenlicht 90, aufnehmen kann.
Die in Figur 2 gezeigten Stege 3 weisen einen Rohrinnendurchmesser D_{IR} und einen Rohraußendurchmesser D_{AR}, welcher sich durch das Auftragen des photokatalytisch aktivierbaren Katalysatormaterials 2 auf den Rohrinnendurchmesser D_{IR} ergibt, auf.

Die Durchmesser D_{IR}, D_{AR} der Stege 3 können beliebig groß ausgebildet sein. Des Weiteren können die Stege 3 auch jede andere beliebige Querschnittsform, beispielsweise in n-Eckform, ausgebildet sein. Ferner ist die Schichtdicke b des photokatalytisch aktivierbaren Katalysatormaterials 2 grundsätzlich frei wählbar. Besonders vorteilhafte Schichtdicken b des Katalysatormaterials 2 liegen im Bereich von 5 cm bis 20 cm. Zudem können die Stege 3 auch komplett aus dem photokatalytisch aktivierbaren Katalysatormaterial 2 bestehen.

Figur 3 zeigt schematisch ein weiteres Ausführungsbeispiel eines Einzelgitters 4' eines Katalysatorträgerkörperes 1 in einer perspektivischen Vorderansicht. Dabei bezeichnen oben bereits verwendete Bezugszeichen gleiche Komponenten.

Wie in Figur 1 wird das in Figur 3 dargestellte Einzelgitter 4 aus einer Mehrzahl miteinander verbundener Stege 3 gebildet, wobei die Stege 3 an ihren Eckpunkten 5 durch Bolzen, Schweiß-, Klebe-, Schraub- und/oder Steckverbindungen zusammengefügt sind.

Die Stege 3 des Einzelgitters 4' sind in der Variante von Figur 3 als Kunststoffröhren 31 ausgebildet, welche photokatalytisch aktivierbares Katalysatormaterial 2 an ihren Oberflächen aufweisen.

Im Gegensatz zu Figur 1 sind am Einzelgitter 4' des Katalysatorträgerkörpers 1 aus Figur 3 zusätzliche lichtreflektierende Materialien 61 an den Knotenpunkten 6, das heißt, jenen Eckunkten 5, an denen sich die Stege 3 kreuzen bzw. die Enden der Stege 3 zusammenstoßen, vorgesehen.

Diese zusätzlich angebrachten reflektierenden Materialien 61 an den Knotenpunkten 6 fördern den Zugang von Licht zu den Oberflächen der Stege 3 des Katalysatorträgerkörpers 1' und ermöglichen es, auch für Licht vorübergehend unerreichbare Stege 3 bzw. Teile der Stege 3 zu beleuchten. Das Katalysatormaterial auf den zusätzlich angestrahlten Stegen 3 wird photokatalytisch aktiviert und erhöht damit den Wirkungsgrad der photokatalystischen Vorrichtung, ohne dass eine Verwendung zusätzlicher künstlicher Lichtquellen 9 notwendig ist.

In anderen Ausgestaltungsformen des Einzelgitters 4' bzw. des daraus ausgebildeten Katalysatorträgerkörpers 1 können sich die lichtreflektierenden Materialien 61 auch an anderen Teilen der Stege 3 und/oder an zusätzlich an dem Katalysatorträgerkörper 1 angebrachten Objekten befinden. Ferner können die lichtreflektierenden Materialien 61 auch in Kombination mit künstlichen Lichtquellen 9 Anwendung finden, um so beispielsweise eine effektive photokatalytische Reaktion des Katalysatorträgerkörpers 1 in der Nacht oder an Tagen mit geringer Lichteinstrahlung hervorzurufen.

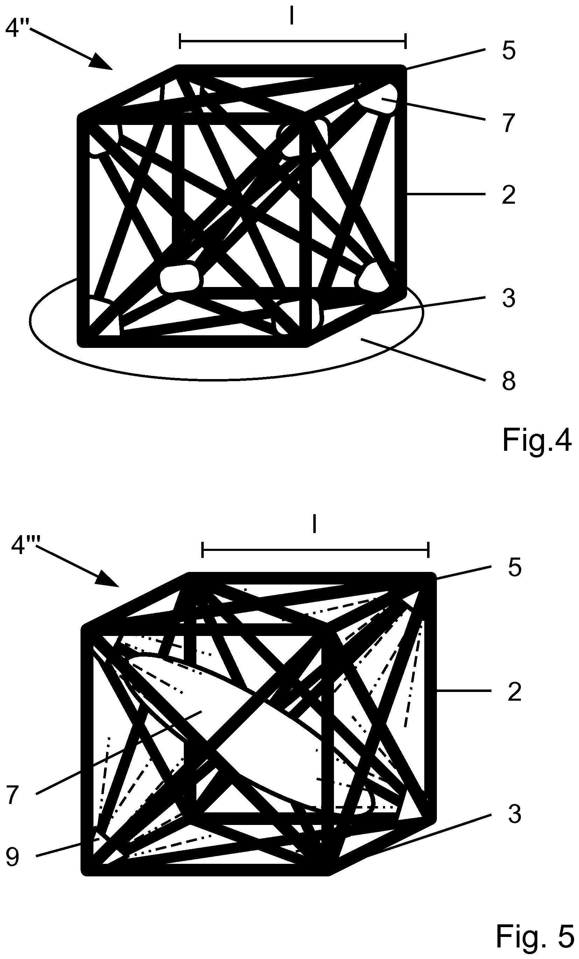

Figur 4 zeigt schematisch eine weitere Ausführungsform eines Einzelgitters 4" eines Katalysatorträgerkörpers 1 in einer perspektivischen Vorderansicht. Dabei wurden wiederum gleiche Bezugszeichen für gleiche Elemente, wie oben erläutert, verwendet.

Wie in den vorangegangen Figuren ist das in Figur 4 dargestellte Einzelgitter 4" aus mehreren miteinander verbundenen Stegen 3 zusammengesetzt, wobei die Stege 3 stangen- oder rohrförmig ausgebildet sind und photokatalytisch aktivierbares Katalysatormaterial 2 wenigstens an ihren Oberflächen vorgesehen ist.

Zusätzlich zu der in Figur 1 beschriebenen Ausprägungsform des Einzelgitters 4, weist das in Figur 4 gezeigte Einzelgitter 4" an den Eckpunkten 5 des Einzelgitters 4" Spiegel 7 auf. Die an den Einzelgittern 4" angebrachten Spiegel 7 erhöhen, ebenso wie die lichtreflektierenden Materialien 61 an den Knotenpunkten 6 in Figur 3, die Lichtdurchdringung des ausgebildeten Katalysatorträgerkörpers 1 und unterstützen damit die Photokatalyse.

In anderen, nicht gezeigten Ausgestaltungen des Einzelgitters 4" kann die Anzahl, Anordnung und/oder Größe der Spiegel 7 auch anders als in Figur 4 dargestellt gewählt werden. Ebenso kann der Einsatz von Spiegeln 7 an dem Katalysatorträgerkörper 1 in Kombination mit anderen, die Photokatalyse unterstützenden Objekten oder Vorrichtungen Anwendung finden.

Ferner weist das in Figur 4 veranschaulichte Einzelgitter 4" eine lichtreflektierende Fläche 8 auf, auf welcher das Einzelgitter 4" bzw. der daraus ausgebildete Katalysatorträgerkörper 1 positioniert ist. Die in dieser Ausführungsform des Katalysatorträgerkörpers 1 eingesetzte, kreisförmige reflektierende Fläche 8 ist in ihren Abmessungen geringfügig größer als die Grundfläche des Katalysatorträgerköpers 1. Die unter dem Katalysatorträgerkörper 1 angebrachte lichtreflektierende Fläche 8 unterstützt die photokatalytische Reaktion der zum Boden 60 gerichteten Flächen der Stege 3 und steigert somit die photokatalytische Umwandlung der Schadstoffe 80.

In weiteren, nicht gezeigten Varianten des erfindungsgemäßen Katalysatorträgerkörpers 1 kann die lichtreflektierende Fläche 8 auch eine andere als in Figur 4 gezeigte Größe und/oder Form aufweisen. Ferner ist es möglich, den Katalysatorträgerköper 1 über einem Wasserbecken anzubringen. Dies hat zum einen den Vorteil, dass die Wasseroberfläche des Wasserbeckens Licht hin zum Katalysatorträgerköper 1 reflektiert. Des Weiteren kann das Wasserbecken auch gleichzeitig für eine zusätzliche Reinigung des erfindungsgemäßen Katalysatorträgerköpers 1 Anwendung finden.

Figur 5 veranschaulicht schematisch eine weitere Ausführungsform eines Einzelgitters 4'" eines erfindungsgemäßen Katalysatorträgerkörpers 1 in einer perspektivischen Vorderansicht. Dabei bezeichnen bereits oben verwendete Bezugszeichen gleiche Komponenten.

Das Einzelgitter 4'" des Katalysatorträgerkörpers 1 setzt sich, wie in den oben beschriebenen Figuren, aus mehreren miteinander verbundenen Stegen 3 zusammen, wobei die Stege 3 photokatalytisch aktivierbares Katalysatormaterial 2 wenigstens an ihrer Oberfläche aufweisen.

Zusätzlich zu dem in Figur 1 beschriebenen Katalysatorträgerköper 1 bzw. dem Einzelgitter 4 weist das Einzelgitter 4'" in Figur 5 einen im Inneren des Einzelgitters 4'" angebrachten Spiegel 7 und ebenfalls im Inneren des Einzelgitters 4'" angebrachte künstliche Lichtquellen 9, welche den Spiegel 7 beleuchten, auf.

Der angebrachte Spiegel 7 ist diagonal mittig im Inneren des Einzelgitters 4'" angebracht und besitzt eine ovale Form, wobei er in anderen Ausführungsformen der vorliegenden Erfindung auch andere Formen aufweisen kann. In seiner Länge erstreckt sich der Spiegel 7 fast über die gesamte Breite I des Einzelgitters 4"'. An seiner breitesten Stelle weist der Spiegel 7 etwa eine halbe Gitterbreite I auf, wobei die Spiegelabmessungen in anderen Varianten auch andere Größen aufweisen können.

Ferner werden der Spiegel 7 und teilweise die Stege 3 von an den Eckpunkten 5 angebrachten künstlichen Lichtquellen 9 beleuchtet, wobei die künstlichen Lichtquellen 9 so ausgerichtet sind, dass die austretenden Lichtstrahlen auf den Spiegel 7 treffen und in andere Richtungen abgelenkt werden. Durch die Bestrahlung des Spiegels 7 können auch sonst nur sehr schwer zugängliche Bereiche der Stege 3 beleuchtet werden und somit zu einer photokatalytischen Schadstoffumwandlung beitragen.

In anderen, nicht gezeigten Ausführungsformen des Katalysatorträgerkörpers 1'" kann die Anzahl und/oder Anordnung der künstlichen Lichtquellen 9 auch anders als in Figur 5 ausgestaltet sein.

Die Ausprägung der Stege 3 als Kunststoffröhren 31 hat beim Einsatz von künstlichen Lichtquellen den Vorteil, dass in den Hohlkörpern der Kunststoffröhren 31 die gegebenenfalls benötigten elektrischen Anschlussleitungen für die künstlichen Lichtquellen 9 ohne großen Aufwand verlegt werden können, ohne das äußere Erscheinungsbild des erfindungsgemäßen Katalysatorträgerkörpers 1"' zu beeinträchtigen.

Zum Einsatz kommende elektrische Leitungen können in anderen Varianten des erfindungsgemäßen Katalysatorträgerkörpers 1 auch in anderen Hohlkörperformen oder in Stegen 3 aus anderem Material verlegt werden.

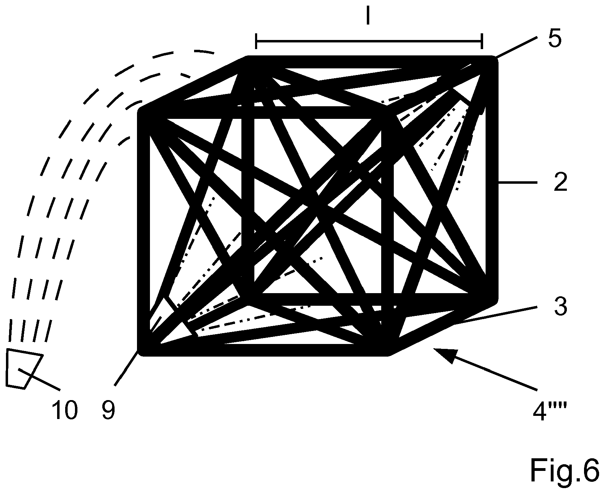

Figur 6 zeigt schematisch eine weitere Ausgestaltungsmöglichkeit eines Einzelglitters 4"" eines erfindungsgemäßen Katalysatorträgerkörpers 1 in einer perspektivischen Vorderansicht, wobei bereits vorher verwendete Bezugszeichen gleiche Komponenten bezeichnen.

Das in der Figur 6 veranschaulichte Einzelgitter 4"" fügt sich, wie in der vorangegangenen Figur 1 beschrieben, aus mehreren einzelnen Stegen 3 zusammen, wobei das photokatalytisch aktivierbare Katalysatormaterial 2 an der Oberfläche der Stege 3 vorgesehen ist.

Ferner weist das in Figur 6 dargestellte Einzelgitter 4"" neben im Inneren des Einzelgitters 4"" angebrachten künstlichen Lichtquellen 9 zur zusätzlichen Beleuchtung der Stege 3 eine Reinigungsvorrichtung 10 zur Unterstützung der Wirkung der superhydrophilen Oberfläche der Stege 3 des Katalysatorträgerkörpers 1 auf.

Das in Figur 6 dargestellte Einzelgitter 4"" besitzt lediglich zwei an den Eckpunkten 5 angebrachte künstliche Lichtquellen 9 zur Unterstützung der Photokatalyse, wobei andere Ausgestaltungsformen des Einzelgitters 4"" bzw. des Katalysatorträgerkörpers 1 eine andere Anzahl und/oder Ausrichtung an künstlichen Lichtquellen 9 aufweisen können.

Ferner verfügt der erfindungsgemäße Katalysatorträgerkörper 1 von Figur 6 über eine Reinigungsvorrichtung 10, welche den Reinigungseffekt der superhydrophilen Oberfläche der Stege 3 unterstützt und damit die Licht- und Luftzugänglichkeit zu dem photokatalytisch aktivierbaren Katalysatormaterial 2 verbessert und gleichzeitig die umweltfreundlichen Reaktionsprodukte der Photokatalyse in den Boden 60 spült.

Die in Figur 6 vorgesehene Reinigungsvorrichtung 10 ist eine Art Rasensprenger. In anderen Ausführungsformen des erfindungsgemäßen Katalysatorträgerkörpers 1 kann die Reinigungsvorrichtung 10, auch anders ausgebildet sein, wie zum Beispiel als eine Art Springbrunnen und/oder Wasserfall.

## Patentansprüche

1. Katalysatorträgerkörper (1) mit wenigstens einem photokatalytisch aktivierbaren Katalysatormaterial (2), **dadurch gekennzeichnet,**
**dass** der Katalysatorträgerkörper (1) ein dreidimensionales, luft- und lichtdurchlässiges Gebilde ist, das aus einer Mehrzahl von einzelnen, miteinander verbundenen Stegen (3) zusammengesetzt ist, wobei das photokatalytisch aktivierbare Katalysatormaterial (2) wenigstens an Oberflächen der Stege (3) vorgesehen ist, wobei der Katalysatorträgerkörper (1) aus den Stegen (3) zu einer wenigstens ein Gitter (4) aufweisenden Gitterstruktur zusammengesetzt ist, und wobei die Stege (3) diagonal einander flächig und räumlich gegenüber liegende Eckpunkte (5) des wenigstens einen Gitters (4) verbinden.

2. Katalysatorträgerkörper nach Anspruch 1, **dadurch gekennzeichnet, dass** der Katalysatorträgerkörper (1) ein freistehender Körper ist, der nicht von einem Gehäuse umgeben ist.

3. Katalysatorträgerkörper nach wenigstens einem der vorhergehenden Ansprüche, **dadurch gekennzeichnet, dass** die Eckpunkte (5) als Verbindungsmodule für die Stege (3) ausgebildet sind, in welche die Stege (3) steckbar oder einschraubbar sind.

4. Katalysatorträgerkörper nach wenigstens einem der vorhergehenden Ansprüche, **dadurch gekennzeichnet, dass** die Stege (3) eine Länge (I) in einem Bereich von 15 cm bis 200 cm aufweisen und/oder der Katalysatorträgerkörper (1) eine Gesamtlänge (L) von größer 3 m, eine Gesamtbreite (B) von größer 3 m und eine Gesamthöhe (H) von größer 3 m aufweist und/oder die Stege (3) eine Breite oder einen Durchmesser (D_{AR}) in einem Bereich von 5 cm bis 20 cm aufweisen.

5. Katalysatorträgerköper nach wenigstens einem der vorhergehenden Ansprüche, **dadurch gekennzeichnet, dass** die Stege (3) aus Kunststoffröhren (31) ausgebildet sind, wobei die Oberflächen der Stege (3) wenigstens eine Beschichtung mit dem photokatalytisch aktivierbaren Katalysatormaterial (2) aufweisen.

6. Katalysatorträgerkörper nach wenigstens einem der vorhergehenden Ansprüche, **dadurch gekennzeichnet, dass** das photokatalytisch aktivierbare Katalysatormaterial (2) Titandioxid ist oder enthält.

7. Katalysatorträgerkörper nach wenigstens einem der vorhergehenden Ansprüche, **dadurch gekennzeichnet, dass** die Stege (3) wenigstens eine superhydrophile Oberfläche aufweisen.

8. Katalysatorträgerkörper nach wenigstens einem der vorhergehenden Ansprüche, **dadurch gekennzeichnet, dass** der Katalysatorträgerkörper (1) ein aus starren Stegen (33) ausgebildetes Außengerüst und eine aus flexiblen Stegen (32) ausgebildete Innenstruktur aufweist.

9. Katalysatorträgerkörper nach Anspruch 8, **dadurch gekennzeichnet, dass** die starren Stege (33) des Außengerüstes als Rohre und/oder Stäbe und die flexiblen Stege (32) der Innenstruktur als Schläuche und/oder Schnüre ausgebildet sind, wobei die starren Stege (33) aus Kunststoff und/oder aus Metall und/oder aus wenigstens einer Metalllegierung und/oder aus Glas und/oder aus Faserverbundwerkstoff und/oder aus Holz ausgebildet sind, und die flexiblen Stege (32) aus textilem Material und/oder aus Kautschuk und/oder aus Kunststoff ausgebildet sind.

10. Katalysatorträgerkörper nach Anspruch 9, **dadurch gekennzeichnet, dass** in den Rohren und/oder Schläuchen wenigstens teilweise Elektroleitungen vorgesehen sind.

11. Katalysatorträgerkörper nach wenigstens einem der vorhergehenden Ansprüche, **dadurch gekennzeichnet, dass** die Stege (3) mittels Bolzen, Schweiß-, Klebe-, Schraub- und/oder Steckverbindung miteinander verbunden sind.

12. Katalysatorträgerkörper nach wenigstens einem der vorhergehenden Ansprüche, **dadurch gekennzeichnet, dass** das photokatalytisch aktivierbare Katalysatormaterial (2) als Beschichtung auf den Stegen (3) vorgesehen ist oder die Stege (3) komplett aus dem photokatalytisch aktivierbaren Katalysatormaterial (2) bestehen.

13. Katalysatorträgerkörper nach wenigstens einem der vorhergehenden Ansprüche, **dadurch gekennzeichnet, dass** Knotenpunkte (6) der Stege (3) aus lichtreflektierendem Material (61) ausgebildet sind und/oder der Katalysatorträgerkörper (1) Spiegel (7) und/oder andere Licht in das Innere des Katalysatorträgerkörpers (1) reflektierende oder projizierende Objekte aufweist und/oder der Katalysatorträgerkörper (1) über einem Wasserbecken oder einer anderen lichtreflektierenden Fläche (8) positioniert ist.

14. Katalysatorträgerkörper nach wenigstens einem der vorhergehenden Ansprüche, **dadurch gekennzeichnet, dass** der Katalysatorträgerkörper (1) motorisiert neig- und/oder drehbar ist.

15. Katalysatorträgerkörper nach wenigstens einem der vorhergehenden Ansprüche, **dadurch gekennzeichnet, dass** der Katalysatorträgerkörper (1) wenigstens eine künstliche Lichtquelle (9) und/oder eine Bewässerungs- oder Reinigungsvorrichtung (10) aufweist.

## Claims

1. Catalyst carrier body (1) with at least one photocatalytically activatable catalyst material (2), **characterized in that**
the catalyst carrier body (1) is a three-dimensional structure permeable to air and light, which is composed of a plurality of individual bars (3) connected with each other, wherein the photocatalytically activatable catalyst material (2) is provided at least on surfaces of the bars (3), wherein the catalyst carrier body (1) is made up of the bars (3) to form a grid structure comprising at least one grid (4), and wherein the bars (3) connect corner points (5) of the at least one grid (4) diagonally opposing each other two-dimensionally and three-dimensionally.

2. Catalyst carrier body (1) according to claim 1, **characterized in that** the catalyst carrier body (1) is a free-standing body, which is not surrounded by a casing.

3. Catalyst carrier body according to at least one of the preceding claims, **characterized in that** the corner points (5) are formed as connecting modules for the bars (3), in which the bars (3) can be plugged or screwed in.

4. Catalyst carrier body according to at least one of the preceding claims, **characterized in that** the bars (3) comprise a length (I) in a range between 15 cm to 200 cm and/or the catalyst carrier body (1) comprises a total length (L) of more than 3 m, a total width (B) of more than 3 m and a total height (H) of more than 3 m and/or the bars (3) comprise a width or a diameter (D_{AR}) in a range between 5 cm to 20 cm.

5. Catalyst carrier body according to at least one of the preceding claims, **characterized in that** the bars (3) are formed of plastic tubes (31), wherein the surfaces of the bars (3) comprise at least one coating with the photocatalytically activatable catalyst material (2).

6. Catalyst carrier body according to at least one of the preceding claims, **characterized in that** the photocatalytically activatable catalyst material (2) is or contains titanium dioxide.

7. Catalyst carrier body according to at least one of the preceding claims, **characterized in that** the bars (3) comprise at least one superhydrophilic surface.

8. Catalyst carrier body according to at least one of the preceding claims, **characterized in that** the catalyst carrier body (1) comprises an outer frame formed of rigid bars (33) and an inner structure formed of flexible bars (32).

9. Catalyst carrier body according to claim 8, **characterized in that** the rigid bars (33) of the outer frame are formed as pipes and/or rods and the flexible bars (32) of the inner structure as flexible tubes and/or cords, wherein the rigid bars (33) are formed of plastic and/or of metal and/or of at least one metal alloy and/or of glass and/or of fiber composite and/or of wood, and the flexible bars (32) are formed of textile material and/or of rubber and/or of plastic.

10. Catalyst carrier body according to claim 9, **characterized in that** electric lines are at least partially provided in the pipes and/or flexible tubes.

11. Catalyst carrier body according to at least one of the preceding claims, **characterized in that** the bars (3) are connected with each other by means of bolts, welding, adhesives, screws and/or plug connection.

12. Catalyst carrier body according to at least one of the preceding claims, **characterized in that** the photocatalytically activatable catalyst material (2) is provided as a coating on the bars (3) or the bars (3) completely consist of the photocatalytically activatable catalyst material (2).

13. Catalyst carrier body according to at least one of the preceding claims, **characterized in that** connection points (6) of the bars (3) are formed of light-reflecting material (61) and/or the catalyst carrier body (1) comprises mirrors (7) and/or other objects reflecting or projecting the light to the inside of the catalyst carrier body (1) and/or the catalyst carrier body (1) is placed above a water basin or another light-reflecting surface (8).

14. Catalyst carrier body according to at least one of the preceding claims, **characterized in that** the catalyst carrier body (1) can be inclined and/or rotated motor-operated.

15. Catalyst carrier body according to at least one of the preceding claims, **characterized in that** the catalyst carrier body (1) comprises at least one artificial light source (9) and/or a watering or cleaning device (10).

## Revendications

1. Corps de support de catalyseur (1) avec au moins un matériau catalyseur activable par photocatalyse (2), **caractérisé en ce que**
le corps de support de catalyseur (1) est une structure tridimensionnelle perméable à l'air et à la lumière qui est composée d'une pluralité de barres (3) individuelles interconnectées, le matériau catalytique activable par photocatalyse (2) étant prévu au moins sur les surfaces des barres (3), le corps de support de catalyseur (1) étant composé des barres (3) pour former une structure de grille ayant au moins une grille (4), et les barres (3) connectant les sommets opposés (5) de la au moins une grille (4) à deux et à trois dimensions.

2. Corps de support de catalyseur selon la revendication 1, **caractérisé en ce que** le corps de support de catalyseur (1) est un corps indépendant qui n'est pas entouré par un boîtier.

3. Corps de support de catalyseur selon au moins l'une des revendications précédentes, **caractérisé en ce que** les sommets (5) sont conçus en tant que modules de liaison pour les barres (3), dans lesquels les barres (3) peuvent être enfichées ou vissées.

4. Corps de support de catalyseur selon au moins l'une des revendications précédentes, **caractérisé en ce que** les barres (3) ont une longueur (I) de l'ordre de 15 cm à 200 cm et/ou que le corps de support de catalyseur (1) a une longueur totale (L) supérieure à 3 m, une largeur totale (B) supérieure à 3 m et une hauteur totale (H) supérieure à 3 m, et/ou les barres (3) ont une largeur ou un diamètre (D_{AR}) compris entre 5 cm et 20 cm.

5. Corps de support de catalyseur selon au moins l'une des revendications précédentes, **caractérisé en ce que** les barres (3) sont des tubes en plastique, les surfaces des barres (3) présentant au moins un revêtement du matériau catalyseur activable par photocatalyse (2).

6. Corps de support de catalyseur selon au moins l'une des revendications précédentes, **caractérisé en ce que** le matériau catalyseur activable par photocatalyse (2) est du dioxyde de titane ou contient du dioxyde de titane.

7. Corps de support de catalyseur selon au moins l'une des revendications précédentes, **caractérisé en ce que** les barres (3) présentent au moins une surface superhydrophile.

8. Corps de support de catalyseur selon au moins l'une des revendications précédentes, **caractérisé en ce que** le corps de support de catalyseur (1) présente un cadre externe formé de barres rigides (33) et une structure interne formée de barres flexibles (32).

9. Corps de support de catalyseur selon la revendication 8, **caractérisé en ce que** les barres rigides (33) du cadre externe sont conçus sous forme de tubes et/ou de barreaux et les barres flexibles (32) de la structure interne sous forme de tuyaux et/ou de cordons ; les barres rigides (33) étant formés en matière plastique et/ou en métal et/ou en au moins un alliage métallique et/ou en verre et/ou en matériau composite fibreux et/ou en bois ; et les barres flexibles (32) étant formé en matériau textile et/ou en caoutchouc et/ou en plastique.

10. Corps de support de catalyseur selon la revendication 9, **caractérisé en ce que** des conduits électriques sont prévu dans les tubes et/ou les tuyaux au moins partiellement.

11. Corps de support de catalyseur selon au moins l'une des revendications précédentes, **caractérisé en ce que** les barres (3) sont interconnectées par des boulons, des soudures, des adhésifs, des liaisons à vis et/ou des bouchons.

12. Corps de support de catalyseur selon au moins l'une des revendications précédentes, **caractérisé en ce que** le matériau catalyseur activable par photocatalyse (2) est prévu en tant que revêtement sur les barres (3) ou les barres (3) sont entièrement constituées du matériau catalyseur activable par photocatalyse (2).

13. Corps de support de catalyseur selon au moins l'une des revendications précédentes, **caractérisé en ce que** les points de jonction (6) des barres (3) sont formés d'un matériau réfléchissant la lumière (61) et/ou le corps de support de catalyseur (1) présente des miroirs (7) et/ou d'autres objets qui réfléchissent ou projettent la lumière vers l'intérieur du corps de support de catalyseur (1) et/ou le corps de support de catalyseur (1) est positionné au-dessus d'un bassin d'eau ou une autre surface réfléchissante (8).

14. Corps de support de catalyseur selon au moins l'une des revendications précédentes, **caractérisé en ce que** le corps de support de catalyseur (1) peut être incliné ou tourné par moteur.

15. Corps de support de catalyseur selon au moins l'une des revendications précédentes, **caractérisé en ce que** le corps de support de catalyseur (1) présente au moins une source de lumière artificielle (9) et/ou un dispositif d'irrigation ou de nettoyage (10).
